# EUROPÄISCHE PATENTSCHRIFT

(11) **EP 4 196 647 B1**
(45) Veröffentlichungstag und Bekanntmachung des Hinweises auf die Patenterteilung: **16.07.2025**
(21) Anmeldenummer: 21759050.4
(22) Anmeldetag: 06.08.2021
(51) Int. Cl.: E04G 21/04

(54) **AUTOBETONPUMPE**
CONCRETE PUMP TRUCK
POMPE À BÉTON AUTOMOTRICE

(30) Priorität: 13.08.2020 DE 102020121350
(43) Veröffentlichungstag der Anmeldung: 21.06.2023
(73) Patentinhaber: Schwing GmbH, 44653 Herne (DE)
(72) Erfinder: LEHMANN, Andreas, 47441 Moers (DE); KRISCHAN, Uwe, 44651 Herne (DE); SCHWEDHELM, Karl-Heinz, 44581 Castrop-Rauxel (DE); HENIKL, Johannes, 46282 Dorsten (DE); SCHINK, Roland, 44652 Herne (DE); VIERKOTTEN, Reiner, 46145 Oberhausen (DE)
(74) Vertreter: Schneiders & Behrendt Bochum
(86) Internationale Anmeldenummer: PCT/EP2021/071995
(87) Internationale Veröffentlichungsnummer: WO 2022/033973

(56) Entgegenhaltungen:
- WO-A1-2020/048745
- JP-A- 2011 163 072

## Beschreibung

Die Erfindung betrifft eine Autobetonpumpe mit einem LKW-Fahrgestell, mit einem Verbrennungs-Antriebsmotor zum Transport der Autobetonpumpe und einem hydraulisch angetriebenen Betonpumpenaufbau mit einem Verteilermast, einer Abstützung und einer Betonpumpe zum Pumpen und Verteilen von Frischbeton.

Bei einer Autobetonpumpe wird heute üblicherweise ein aus mehreren in Reihe angeordneten Hydraulikpumpen bestehender Hydraulikpumpenstrang, der die Aggregate des Betonpumpenaufbaus, beispielweise die Betonpumpe, den Verteilermast, die Abstützung und weitere für den Betrieb notwendige Aggregate antreibt, auf der Baustelle von einem Dieselmotor des LKW-Fahrgestells angetrieben.

Zur Reduktion des Ausstoßes von unerwünschten Abgasen und klimaschädlichem Kohlendioxid ist es wünschenswert, auch Autobetonpumpen auf der Baustelle elektrisch anzutreiben.

Die WO 2020/048745 A1 offenbart eine hydraulisch angetriebene Autobetonpumpe mit einem Verbrennungs-Antriebsmotor, der alle Hydraulikpumpen antreibt und zusätzlich einen Elektromotor, der ebenfalls alle Hydraulikpumpen antreibt.

Die JP 2011 163072 A betrifft ebenfalls eine Autobetonpumpe mit einem hydraulischen Antriebskreis zum Antrieb einer Betonpumpe, wobei hier ein Elektromotor eine Hydraulikpumpe antreibt und ein Verbrennungs-Antriebsmotor eine weitere Hydraulikpumpe antreibt, wobei der Verbrennungs-Antriebsmotor zum Betrieb der Betonpumpe die weitere Hydraulikpumpe antreibt, wenn der Elektromotor nicht mit Strom versorgt werden kann.

Bei einer elektrisch bzw. hybrid (diesel- und elektrisch) angetriebenen Autobetonpumpe besteht das Problem, dass die von einer Bordbatterie und/oder einer Baustellenstromversorgung zur Verfügung gestellte elektrische Leistung in der Regel nicht ausreicht, um die Autobetonpumpe für den Betonpump-/fördervorgang ausreichend bzw. über einen ausreichend langen Zeitraum, elektrisch anzutreiben.

Weil der rein elektrische Betrieb einer Autobetonpumpe aus diesem Grund nicht möglich, oder zumindest stark eingeschränkt ist, wäre es dennoch wünschenswert, die Laufzeit des die Autobetonpumpe antreibenden Dieselmotors, auf der Baustelle möglichst zu begrenzen, um den Ausstoß von Abgasen und die Lärmbelästigung möglichst gering zu halten.

Eine Autobetonpumpe mit einem Hybridantrieb wird beispielsweise in der Patentanmeldung DE 10 2018 214 965 A1 beschrieben. Der Elektromotor und der Dieselmotor können gemäß dieser Patentanmeldung einen gemeinsamen Hydraulikpumpenstrang wahlweise abwechselnd oder gemeinsam antreiben.

Damit wäre es beispielsweise möglich, den Aufbau und Abbau der Betonpumpe, das heißt, das Ausfahren der Stützen, Ausfalten des Mastes, Reinigung der Betonpumpe, Einfalten des Mastes und Einfahren der Stützen elektrisch durchzuführen und während des Pumpbetriebes den Dieselmotor zu nutzen bzw. zum Elektromotor zuzuschalten.

Der Auf- und Abbau der Betonpumpe wäre bei der Autobetonpumpe aus der oben genannten Schrift aber sehr uneffektiv, weil der Elektromotor immer den gesamten Hydraulikpumpenstrang, d.h. auch die Hydraulikpumpen für den Betonpumpenbetrieb mit antreibt, auch wenn diese im Leerlaufbetrieb sind.

Zudem bleibt nach den eigentlichen Betonierarbeiten der Verbrennungsmotor sehr lange für die Reinigung des Betonpumpenaufbaus in Betrieb. Die Reinigung umfasst beispielsweise das Ansaugen eines Reinigungskörpers durch die Förderleitung, um Restbeton aus der Förderleitung zu entfernen und das Entfernen von Betonresten mit einem Wasserschlauch oder Hochdruckreiniger. Für die Reinigungsarbeiten ist zumindest zeitweise der Betrieb der Betonpumpe erforderlich.

Es ist daher Aufgabe der Erfindung, eine Autobetonpumpe bereitzustellen, die die oben genannten Probleme löst.

Gelöst wird diese Aufgabe durch eine Autobetonpumpe mit den Merkmalen des Anspruchs 1.

Die Erfindung schlägt eine Autobetonpumpe mit einem LKW-Fahrgestell mit einem Verbrennungs-Antriebsmotor vor, wobei der Verbrennungs-Antriebsmotor zum Antrieb der Autobetonpumpe beim Fahren ausgebildet ist. Die Autobetonpumpe weist ferner einen hydraulisch angetriebenen Betonpumpenaufbau mit einem Verteilermast, einer Abstützung und einer Betonpumpe zum Pumpen und Verteilen von Frischbeton auf. Die Autobetonpumpe weist zudem Hydraulikpumpen auf, die zum Antrieb des Betonpumpenaufbaus ausgebildet sind, wobei mindestens eine Hydraulikpumpe zum Antrieb der Betonpumpe ausgebildet ist und mindestens eine weitere Hydraulikpumpe zum Antrieb des Verteilermastes und der Abstützung ausgebildet ist. Die Autobetonpumpe ist insbesondere dadurch gekennzeichnet, dass der Verbrennungs-Antriebsmotor zum Antrieb der Hydraulikpumpe ausgebildet ist, die wiederum zum Antrieb der Betonpumpe ausgebildet ist. Die mindestens eine weitere Hydraulikpumpe, die zum Antrieb des Verteilermastes und der Abstützung ausgebildet ist, ist mittels eines Elektromotors, der nur die mindestens eine weitere Hydraulikpumpe antreibt, rein elektrisch angetrieben.

Das heißt, dass der aus mehreren Hydraulikpumpen gebildete Hydraulikpumpenstrang einer Autobetonpumpe nach dem Stand der Technik in zwei Teile aufgeteilt wird, wobei der Verbrennungs-Antriebsmotor die Hydraulikpumpe für den Betonpumpenbetrieb antreibt. Ein Elektromotor, der den Verteilermast beziehungsweise die Abstützung antreibt, kann jetzt sehr effektiv eingesetzt werden, um beispielsweise den Auf- und Abbau der Autobetonpumpe auf der Baustelle mit einem rein elektrischen Antrieb durchzuführen. Der Aufbau einer Autobetonpumpe, d.h. das Ausfahren der Stützen und der Stützbeine und das Ausfalten des Verteilermastes dauern ca. eine halbe Stunde. Der Abbau der Autobetonpumpe dauert in etwa den gleichen Zeitraum. Während dieser Zeiträume kann mit der Erfindung der Betonpumpenaufbau effektiv elektrisch angetrieben werden und ein Betrieb des Verbrennungsmotors ist in dieser Zeit nicht notwendig. Nur für die Zeit des eigentlichen Betonfördervorganges, der sehr viel Energie erfordert, ist der Betrieb des Verbrennungs-Antriebsmotors erforderlich.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung weist die Autobetonpumpe eine hydraulische Umschalteinrichtung auf, die dazu ausgebildet, den Verteilermast und die Abstützung wechselseitig mit der Hydraulikpumpe zu verbinden, die für den Antrieb des Verteilermastes und / oder der Abstützung ausgebildet ist. Dadurch kann der Elektromotor sehr einfach in Verbindung mit einer Hydraulikpumpe zum Abstützen der Autobetonpumpe und zum Ein- und Ausfalten des Verteilermastes eingesetzt werden.

Bevorzugt ist vorgesehen, dass der Verbrennungs-Antriebsmotor zusätzlich zum Antrieb einer Hydraulikpumpe ausgebildet ist, die zum Antrieb einer Rohrweiche ausgebildet ist. Dadurch, dass der Verbrennungs-Antriebsmotor auch die zu der Betonpumpe gehörende Rohrweiche antreibt, kann die Antriebsenergie des Verbrennungs-Antriebsmotors effektiv für den Betonfördervorgang eingesetzt werden.

Gemäß einer vorteilhaften Ausgestaltung ist der Verbrennungs-Antriebsmotor zum Antrieb einer Hydraulikpumpe ausgebildet, die zum Antrieb eines Rührwerkes ausgebildet ist. Dadurch, dass der Verbrennungs-Antriebsmotor auch das zu der Betonpumpe gehörende Rührwerk antreibt, kann die Antriebsenergie des Verbrennungs-Antriebsmotors effektiv für den Betonfördervorgang eingesetzt werden.

Gemäß einer vorteilhaften Ausgestaltung der Erfindung ist der Elektromotor zum Antrieb der Hydraulikpumpe ausgebildet, die zum Antrieb der Rohrweiche ausgebildet. Diese Ausführungsform erlaubt den Betrieb der Rohrweiche mittels des Elektromotors, um die Rohrweiche beispielsweise nach dem Betonfördervorgang zu reinigen, so dass der Verbrennungs-Antriebsmotor für die Reinigung der Rohweiche nicht eingeschaltet sein muss.

Gemäß einer vorteilhaften Ausgestaltung ist der Elektromotor zudem zum Antrieb der Hydraulikpumpe ausgebildet, die zum Antrieb des Rührwerkes ausgebildet ist, so dass auch das Rührwerk zum Beispiel für die Reinigung am Ende der Betonausbringung rein elektrisch angetrieben werden kann.

Bevorzugt ist eine hydraulische Umschalteinrichtung vorgesehen, die die Hydraulikpumpe, die zum Antrieb des Verteilermastes und der Abstützung ausgebildet ist, mit der Betonpumpe verbindet. Diese Umschalteinrichtung ermöglicht es, die Betonpumpe, insbesondere die Differentialzylinder der Betonpumpe und damit die Förderzylinder der Betonpumpe für den Reinigungsbetrieb zu betreiben, ohne dass der Verbrennungs-Antriebsmotor für den Reinigungsbetrieb eingeschaltet sein muss.

Gemäß einer vorteilhaften Ausführungsform wird der Elektromotor über eine elektrische Umschalteinrichtung mit Strom versorgt. Diese elektrische Umschalteinrichtung ermöglicht es, den Elektromotor auf einfache Weise mit verschiedenen Stromquellen zu verbinden und bei Bedarf zwischen diesen Stromquellen umzuschalten.

**In** einer vorteilhaften Ausgestaltung ist die elektrische Umschalteinrichtung dazu ausgebildet, einen elektrischen Energiespeicher mit dem Elektromotor zu verbinden. Dieser elektrische Energiespeicher kann beispielsweise dauerhaft auf dem Betonpumpenaufbau angeordnet sein und ermöglicht eine einfache Versorgung des Elektromotors mit elektrischer Energie.

In einer vorteilhaften Ausgestaltung ist die elektrische Umschalteinrichtung dazu ausgebildet, einen Baustellenstromanschluss mit dem Elektromotor zu verbinden. So lässt sich mittels der Umschalteinrichtung eine einfache und dauerhafte Stromversorgung gewährleisten.

In einer vorteilhaften Ausgestaltung ist der Verbrennungs-Antriebsmotor zum Antrieb eines Stromgenerators ausgebildet. Mittels eines derartigen Stromgenerators kann beispielsweise bei den Fahrten von und zur Baustelle der vom Stromgenerator generierte Strom zum Aufladen des elektrischen Energiespeichers genutzt werden.

In einer vorteilhaften Ausgestaltung ist der Generator über eine Kupplung mit der Hydraulikpumpe, die zum Antrieb der Betonpumpe ausgebildet ist, verbunden. Diese Kupplung ermöglicht es, einen Generator, der zwischen dem Verbrennungs-Antriebsmotor und der Hydraulikpumpe, die zum Antrieb der Betonpumpe ausgebildet ist, von dieser Hydraulikpumpe zu entkoppeln, so dass für den Antrieb des Generators die Hydraulikpumpe nicht unnötigerweise mit angetrieben wird.

In einer vorteilhaften Ausgestaltung ist der Generator zum Antrieb des Elektromotors ausgebildet. Sollte beispielsweise auf einer Baustelle keine Baustellenstromversorgung verfügbar sein und / oder der elektrische Energiespeicher auf der Autobetonpumpe entladen oder nicht vorhanden ist, kann damit der Auf- und Abbau der Autobetonpumpe im Notfall sicher vorgenommen werden.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
Figur 1 Ansicht einer erfindungsgemäßen Autobetonpumpe,
Figur 2 Antriebsschema einer Autobetonpumpe gemäß dem Stand der Technik,
Figur 3 Variante eines Antriebsschemas einer Autobetonpumpe gemäß dem Stand der Technik,
Figur 4a, 4b Antriebsschema einer erfindungsgemäßen Autobetonpumpe in einer ersten Ausführungsform,
Figur 5 Antriebsschema einer erfindungsgemäßen Autobetonpumpe in einer zweiten Ausführungsform,
Figur 6 Antriebsschema einer erfindungsgemäßen Autobetonpumpe in einer dritten Ausführungsform,
Figur 7 Antriebsschema mit einer elektrischen Energieversorgung gemäß der Erfindung, und
Figur 8a-e Varianten von Baustellenstromversorgungen für eine erfindungsgemäße Autobetonpumpe.

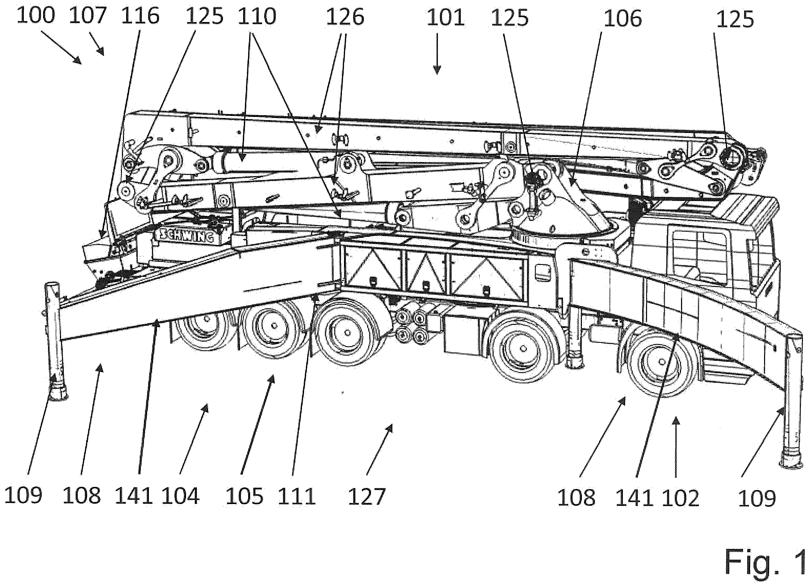

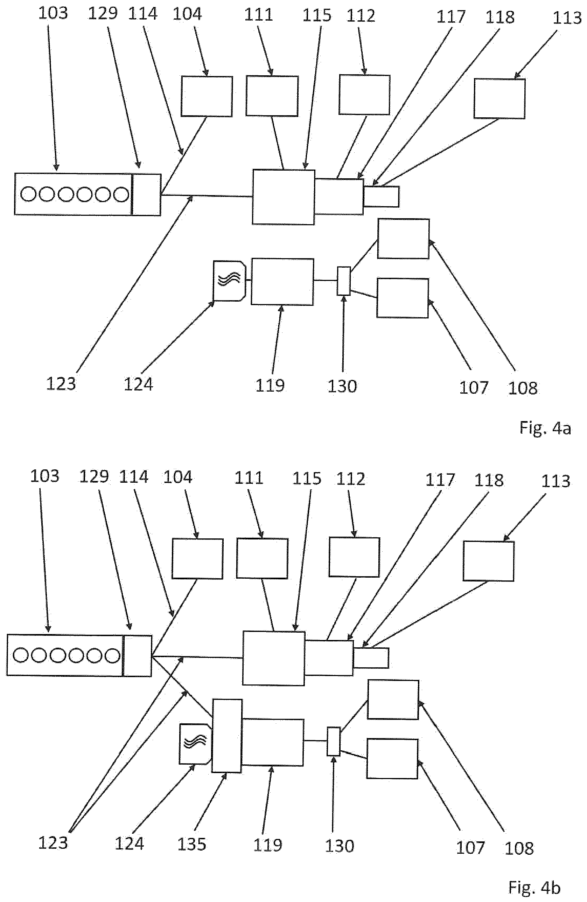

In der Figur 1 ist eine erfindungsgemäße Autobetonpumpe 100 dargestellt. Die Autobetonpumpe 100 weist insbesondere einen, von einem Verbrennungs-Antriebsmotor 103 (s. Fig. 4) angetriebenen LKW 102 mit einem Fahrgestell 104 auf, auf dem ein Betonpumpenaufbau 101 angeordnet ist. Der Betonpumpenaufbau 101 weist im Wesentlichen einen Betonpumpenunterbau 127 mit einer Abstützung 108 mit hydraulisch angetriebenen Stützzylindern 109 und abklappbaren oder ausfahrbaren Stützträgern 141 sowie eine hydraulisch angetriebene Betonpumpe 111 auf. Der Betonpumpenunterbau 127 trägt an seinem hinteren Ende einen Aufgabetrichter 116 für flüssigen Frischbeton, in dem ein von einem Hydraulikmotor angetriebenes Rührwerk 113 den, beispielweise von einem Fahrmischer eingefüllten, Frischbeton, durchrührt. Im unteren Bereich des Aufgabetrichters 116 ist eine hydraulisch angetriebene Rohrweiche 112 (s. Fig. 4) angeordnet. Der Betonpumpenunterbau 127 beinhaltet zudem die Hydraulikpumpen 115, 119, 117, und 118 (s. Fig. 4) zum Antrieb der Aggregate des Betonpumpenaufbaus 101. Der Betonpumpenunterbau 127 ist über einen Drehschemel 106 mit einem Verteilermast 107 verbunden, dessen einzelne Mastsegmente 126 über Knickgelenke 125 miteinander verbunden sind. Der Verteilermast 107, beziehungsweise jedes der Knickgelenke 125, wird mittels Hydraulikzylindern 110 betätigt. Der Hydraulikdruck zum Antrieb der Hydraulikzylinder 110 des Verteilermastes 107 und der Abstützung 108 wird von einer Hydraulikpumpe 119 bereitgestellt.

Bei der Betonpumpe 111 handelt es sich üblicherweise um eine ZweiZylinderkolbenpumpe (nicht dargestellt) mit zwei hydraulisch angetriebenen Differentialzylindern und zwei Förderzylindern, die den Frischbeton aus dem Aufgabetrichter 116 abwechselnd ansaugen und über die schaltbare Rohrweiche 112 in eine nicht dargestellte, entlang des ausgefalteten Verteilermastes 107 geführte, Förderleitung pumpen und somit auf der Baustelle verteilen.

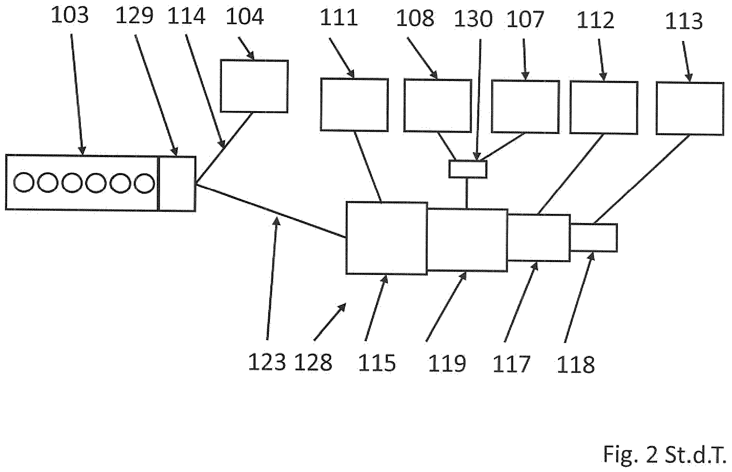

In der Figur 2 ist ein Antriebsschema einer Autobetonpumpe bzw. des Betonpumpenaufbaus 101 gemäß dem Stand der Technik dargestellt. Ein Verbrennungsmotor 103 treibt für den Fahrbetrieb das Fahrgestell 104 über ein Getriebe und eine Kardanwelle 114 an. Für den Arbeitsbetrieb, das heißt, für den Auf- und Abbau der Autobetonpumpe 100 und den Pumpbetrieb auf einer Baustelle treibt der Verbrennungsmotor 103 die zu einem Hydraulikpumpenstrang zusammengefassten Hydraulikpumpen 115, 117, 118 und 119 über den Nebenantrieb 123 des Getriebes 129 an. Über jede der Hydraulikpumpen 115, 119, 117 wird jeweils die nachfolgende Hydraulikpumpe 119, 117, 118 angetrieben.

Die Hydraulikpumpe 115, die häufig auch aus zwei einzelnen, in Serie angeordneten, leistungsstarken Hydraulikpumpen besteht, treibt insbesondere die hier nicht dargestellten Differentialzylinder der Betonpumpe 111 über eine geeignete, aus Gründen der Übersichtlichkeit nicht dargestellte, hydraulische Steuerung an.

Eine weitere Hydraulikpumpe 119 versorgt über eine hydraulische Umschalteinrichtung 130 wahlweise den Verteilermast 107 oder die Abstützung 108 mit hydraulischer Antriebsleistung. Auch hier sind die weiteren Details der Hydrauliksteuerung aus Gründen der Übersichtlichkeit nicht dargestellt. Die Verwendung nur einer Hydraulikpumpe 119 ist insbesondere möglich, weil der Verteilermast 107 erst ausgefaltet werden darf, wenn die Autobetonpumpe 100 ordnungsgemäß abgestützt ist. Andererseits ist nach Beendigung der Betonierarbeiten der Verteilermast 107 zunächst vollständig einzufalten, bevor die Abstützung 108 eingefahren werden kann.

Eine weitere Hydraulikpumpe 117 treibt die Rohrweiche 112 an. Dafür lädt die Hydraulikpumpe 117 in der Regel ständig einen nicht dargestellten Hydraulikdruckspeicher, der die Energie zum schlagartigen Umschalten der Rohrweiche 112 bereitstellt. Aus diesem Grund wird die Hydraulikpumpe 117 auch als Speicherladepumpe bezeichnet. Mit einer weiteren Hydraulikpumpe 118 wird der Hydraulikmotor des Rührwerks 113 im Aufgabetrichter 116 angetrieben. Weitere Hydraulikpumpen, z.B. zum Antrieb eines Hydraulikölkühlers und anderer Aggregate des Betonpumpenaufbaus 101 können, abhängig von der Ausstattung des Betonpumpenaufbaus 101, vorhanden sein.

Die dargestellte Größe der Hydraulikpumpen 115, 117, 118, 119 spiegelt die Leistung dieser Pumpen wider. D.h. die Leistung der Hydraulikpumpe 115 ist in der Regel größer als die Leistung der Hydraulikpumpe 119. Die Leistung der nachfolgenden Hydraulikpumpen 117, 118 ist üblicherweise geringer als die der vorhergehenden Hydraulikpumpen.

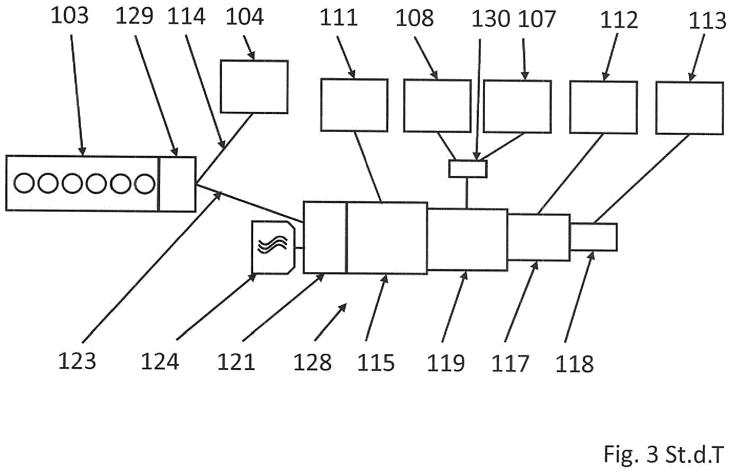

In Figur 3 ist das Antriebsschema einer Autobetonpumpe 100 nach dem Stand der Technik dargestellt, bei der die Aggregate des Betonpumpenaufbaus 101 wahlweise mit einem Verbrennungsmotor 103 oder einem Elektromotor 124 angetrieben werden können, aber auch der gemeinsame Antrieb des Betonpumpenaufbaus 101 mit dem Verbrennungsmotor 103 und dem Elektromotor 124 ist möglich. Die Hydraulikpumpen 115, 117, 118, 119 werden über ein Verteilerschaltgetriebe angetrieben, dass wahlweise vom Nebenantrieb 123 des Getriebes 129 des Verbrennungs-Antriebsmotors 103 oder dem Elektromotor 124 angetrieben wird. Wenn der Elektromotor 124 während des Auf- und Abbaus der Autobetonpumpe 100 eingesetzt wird, muss dieser auch die Hydraulikpumpe 115 antreiben, obwohl die Betonpumpe 111 zu diesem Zeitpunkt nicht betrieben wird. Auch der Antrieb der Hydraulikpumpe 115 im Leerlaufbetrieb verbraucht sehr viel Energie, so dass auch der Auf- und Abbau einen auf der Autobetonpumpe 100 angeordneten elektrischen Energiespeicher zur Versorgung des Elektromotors 124 unnötig schnell entladen würde.

In Figur 4a ist ein Antriebsschema einer Autobetonpumpe 100 gemäß der Erfindung in einer ersten Ausführungsform dargestellt. Die Autobetonpumpe 100 (s Fig. 1) weist ein LKW - Fahrgestell 104 mit einem Verbrennungs-Antriebsmotor 103 zum Transport der Autobetonpumpe, sowie einen hydraulisch angetriebenen Betonpumpenaufbau 101 (s. Fig. 1) auf. Zudem weist die Autobetonpumpe einen Verteilermast 107, eine Abstützung 108 und eine Betonpumpe 111 zum Pumpen und Verteilen von Frischbeton auf. Ferner weist die Autobetonpumpe Hydraulikpumpen 115, 117, 118, 119 auf, die zum Antrieb des Betonpumpenaufbaus 101 ausgebildet sind, wobei mindestens eine Hydraulikpumpe 115 zum Antrieb der Betonpumpe 111 ausgebildet ist und eine weitere Hydraulikpumpe 119 für den Antrieb des Verteilermastes und der Abstützung 107 ausgebildet ist. Der Verbrennungs-Antriebsmotor 103 des LKW ist dazu ausgebildet, die Hydraulikpumpe 115 zum Antrieb der Betonpumpe 111 anzutreiben. Ein Elektromotor 124 ist dazu ausgebildet, die Hydraulikpumpe 119 anzutreiben, die zum Antrieb des Verteilermastes und der Abstützung 108 ausgebildet ist.

Der Verbrennungsantriebsmotor 103 ist mit einem Getriebe 129 verbunden und im Fahrbetrieb, d.h. beispielsweise bei der Fahrt zu einer Baustelle und zurück, werden die Räder des Fahrgestells über die Kardanwelle 114 angetrieben. Sobald die Autobetonpumpe 100 auf der Baustelle angekommen und positioniert ist, kann der Verbrennungsmotor 103 abgeschaltet werden.

Während des Aufbaus der Autobetonpumpe 100 wird die Autobetonpumpe 100 zunächst durch das Ausfahren bzw. Abklappen der Stützausleger 141 und das Ausfahren der Stützzylinder 109 der Abstützung 108 abgestützt. Für diesen Abstützvorgang wird die Hydraulikpumpe 119 vom Elektromotor 124 angetrieben und das Hydrauliköl wird über die hydraulische Umschalteinrichtung 130 und eine, aus Gründen der Übersichtlichkeit nicht dargestellte, hydraulische Steuerung der Abstützung 108 zugeführt. Nachdem die Autobetonpumpe 100 ordnungsgemäß abgestützt ist, wird der Verteilermast 107 ausgefaltet. Hierfür wird die hydraulische Umschalteinrichtung 130 auf den Betrieb des Verteilermastes 107 umgeschaltet. In einer nicht dargestellten, alternativen Ausführungsform, treibt der Elektromotor 124 einen verkürzten Hydraulikpumpenstrang mit separaten Hydraulikpumpen für den Antrieb der Abstützung 108 und den Antrieb des Verteilermastes 107 an. Die Umschalteinrichtung 130 wäre bei dieser alternativen Ausführungsform nicht erforderlich.

Erst nachdem die Autobetonpumpe 100 abgestützt und der Verteilermast 107 ausgefaltet ist, wird für den eigentlichen Betoniervorgang der Verbrennungs-Antriebsmotor 103 in Betrieb genommen und treibt über den Nebenantrieb 123 des Getriebes 129 die für den Betrieb der Betonpumpe 111, der Rohrweiche 112 und des Rührwerks 113 erforderlichen Hydraulikpumpen 115, 117 und 118 an. Der Verteilermast 107 wird während des Betonierbetriebes weiterhin mittels des Elektromotors 124 angetrieben. Nach Beendigung des Betoniervorganges wird der Verbrennungs-Antriebsmotor 103 abgeschaltet und der Verteilermast 107 wird mit Hilfe des Elektromotors 124 eingefaltet und danach die Abstützung 108 eingefahren.

Die Figur 4b zeigt eine Variante des Aufbaus aus der Figur 4a mit zwei Nebenabtrieben 123 des Verbrennungs-Antriebsmotors 103. Die Hydraulikpumpe 119 kann einerseits beispielsweise über ein Verteilerschaltgetriebe 135 vom Elektromotor 124 elektrisch angetrieben werden. Anderseits kann die Mastpumpe 119 auch über den zweiten Nebenantrieb 123 und das Verteilerschaltgetriebe 135 vom Verbrennungs-Antriebsmotor 103 angetrieben werden. Der Vorteil dieser Variante wäre es, dass die Autobetonpumpe 103 auch komplett über den Verbrennungs-Antriebsmotor versorgt werden kann, was z.B. bei einem Ausfall der elektrischen Komponenten oder bei einer entladenen Batterie sinnvoll wäre. Zusätzlich könnte der Elektromotor dann auch als Generator, angetrieben vom Verbrennungs-Antriebsmotor 103 über das Verteilerschaltgetriebe 123, eingesetzt werden. Mit einer Kupplung zwischen Verteilerschaltgetriebe 135 und der Hydraulikpumpe 119 kann mittels der Generatorfunktionalität des Elektromotors 124 eine Batterie geladen werden, ohne die Hydraulikpumpe 119 mit anzutreiben.

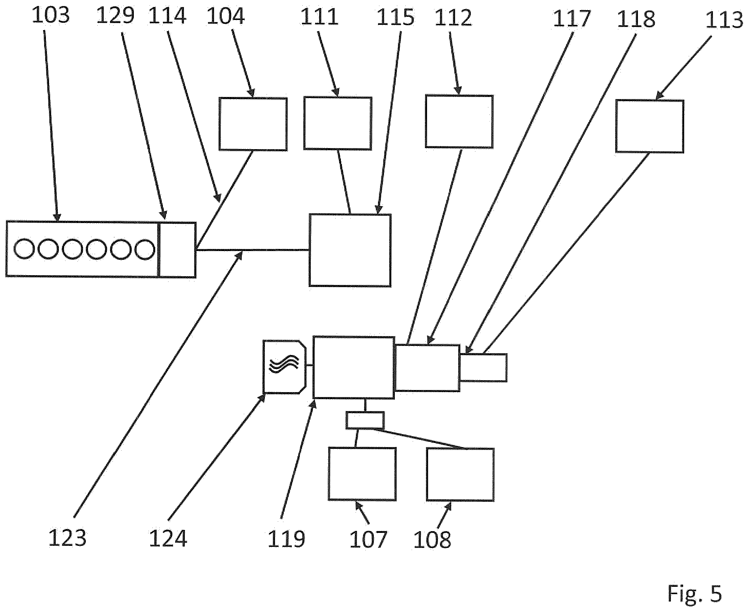

In Figur 5 ist ein Antriebsschema für alternative Ausführungsform der Erfindung dargestellt. Bei dieser Ausführungsform werden die Hydraulikpumpe 117 für den Antrieb der Rohrweiche 112 sowie die Hydraulikpumpe 118 für den Antrieb des Rührwerkes 113 vom Elektromotor 124 über die Hydraulikpumpe 119 angetrieben. Dies hat den Vorteil, dass nach dem Betoniervorgang, bei noch abgeschaltetem Verbrennungs-Antriebsmotor 103, die Rohrweiche 112 und das Rührwerk 113 für die Reinigung von Betonresten, beispielsweise mit einem Hochdruckreiniger, bewegt werden können, um alle Bauteile für die Reinigung gut zu erreichen.

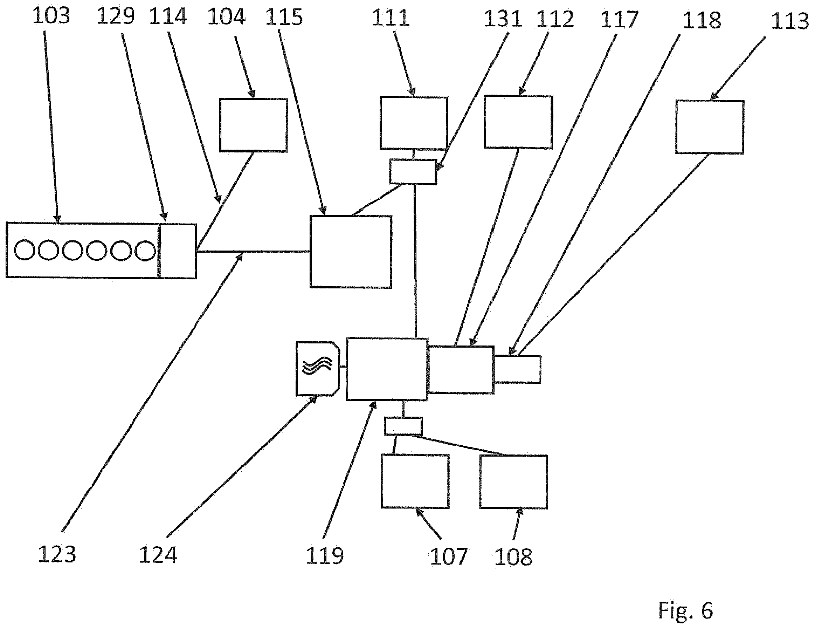

In Figur 6 ist ein Antriebsschema für eine weitere alternative Ausgestaltung der Erfindung dargestellt, bei der eine weitere hydraulische Umschalteinrichtung 131 vorgesehen ist, mit der die Hydraulikpumpe 119 mit der Betonpumpe 111 verbunden werden kann. Dies hat den Vorteil, dass bei dem, in Verbindung mit der Figur 4 dargestellten, Reinigungsbetrieb, auch die nicht dargestellten hydraulischen Differentialzylinder der Betonpumpe 111 elektrisch betrieben werden können. Für den eigentlichen Betonfördervorgang ist die vom Verbrennungs-Antriebsmotor 103 bereitgestellte Arbeitsleistung für den Antrieb der Betonpumpe 111, d.h. insbesondere für die Differentialzylinder, notwendig. Für die Reinigung der Betonpumpe 111 und insbesondere um Restbeton aus der Förderleitung zu entfernen, wird üblicherweise ein Reinigungsball über die Förderleitung zurückgesaugt oder mit Wasser durch die Förderleitung geschoben. Der Energiebedarf für diese Art der Reinigung der Förderleitung ist im Vergleich zum Betonfördervorgang vergleichsweise gering, so dass auch ein Elektromotor 124 mit relativ geringer Anschlussleistung, der für den Betonierbetrieb nicht ausreichend wäre, für den gesamten Reinigungsvorgang verwendet werden kann und der Verbrennung-Antriebsmotor 103 auch in dieser Zeit abgeschaltet bleiben kann. Bei dem in Figur 6 dargestellten Ausführungsbeispiel könnten alternativ auch die ebenfalls vom Elektromotor 124 angetriebenen Hydraulikpumpen 117 oder 118 für den Antrieb der Betonpumpe 111, bzw. der Differentialzylinder der Betonpumpe 111 während des Reinigungsbetriebes verwendet werden.

In den Figuren 4a, 4b, 5 und 6 wurde auf die Darstellung der elektrischen Energieversorgung für den Elektromotor 124 aus Gründen der Übersichtlichkeit verzichtet. Diese elektrische Energieversorgung für den Elektromotor 124 wird im Folgenden näher erläutert.

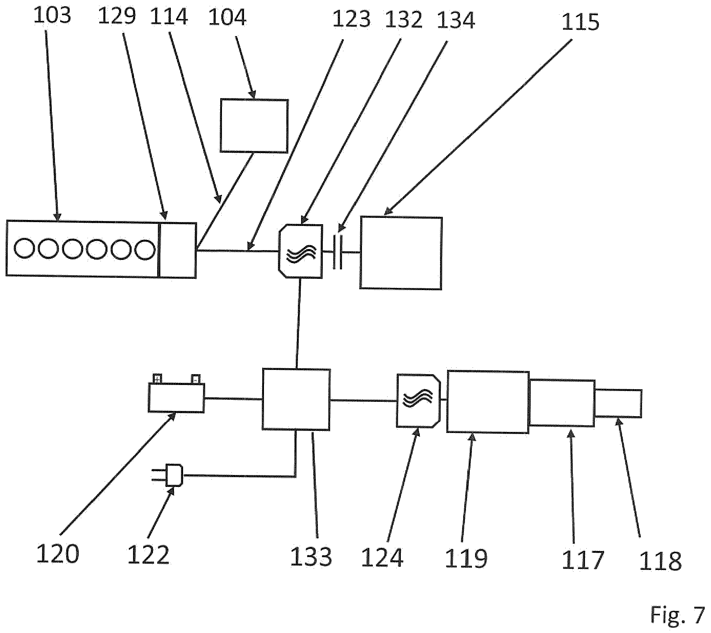

In Figur 7 ist in vereinfachter Form der Antrieb gemäß der Figuren 5 und 6 dargestellt, bei der die hydraulisch angetriebenen Aggregate des Betonpumpenaufbaus 101 aus Gründen der Übersichtlichkeit nicht dargestellt sind. Der Elektromotor 124 ist mit einer elektrischen Umschalteinrichtung 133 zur Stromversorgung verbunden, die Alternativ oder auch gleichzeitig einen Anschluss 122 zu einer Baustellenstromversorgung oder zu einem elektrischen Energiespeicher 120 herstellt. Der elektrische Energiespeicher 120, der über eine relativ geringe Kapazität verfügen kann, weil der Elektromotor 124 nicht die Betonpumpe 111 für den Betonförderbetrieb antreibt, ist vorzugsweise auf dem Betonpumpenaufbau 101 oder am LKW-Fahrgestell 104 angeordnet. Zusätzlich ist auf dem Betonpumpenaufbau 101 ein Generator 132 angeordnet, der vom Verbrennungs-Antriebsmotor 103, beispielsweise über den Nebenantrieb 123, angetrieben wird. Der Generator 132 ist über eine ausrückbare Kupplung 134 mit der Hydraulikpumpe 115 verbunden. Mit dieser Anordnung kann der Generator 132 bei eingeschaltetem Nebenantrieb 123 den elektrischen Energiespeicher 120 über die Umschalteinrichtung 133 beispielsweise auf den Fahrten von und zur Baustelle oder während Pausen bei der Betonförderung aufladen. Alternativ kann der Generator 132 auch einen Notbetrieb des Verteilermastes 107 und der Abstützung 108 mittels des Verbrennungsmotors 103 sicherstellen, wenn kein elektrischer Energiespeicher 120 vorhanden oder dieser entladen ist, beziehungsweise keine Baustellenstromversorgung verfügbar ist.

Die Ergänzung des Antriebs um einen zweiten Nebenantrieb 123 und ein Verteilerschaltgetriebe 135, wie in der Figur 4a gezeigt, ist auch auf die Ausführungen der Erfindung entsprechend der Figuren 5, 6 und 7 übertragbar, wobei der separate Generator 132 aus der Figur 7 dann nicht mehr notwendig wäre.

In weiteren Varianten könnte der Verbrennungs-Antriebsmotor 103 die Betonpumpe 111 und die Rohrweiche 112 während des Pumpvorganges antreiben. Das Rührwerk 113 wird, wie in Figur 5 dargestellt, vom Elektromotor 124 angetrieben, könnte aber auch, wie unter Umständen auch andere Einrichtungen der Autobetonpumpe 100 auch, direkt vom einem Elektromotor, unter Umgehung des hydraulischen Antriebs, angetrieben werden.

Um in Pumppausen, das heisst, wenn beispielsweise auf den nächsten Fahrmischer mit Frischbeton gewartet wird, den Verbrennungs-Antriebsmotor 103 abschalten zu können, ist eine Variante denkbar, in der der Mast 107, die Abstützung 108 und das Rührwerk 113 vom Elektromotor 124 und die Hydraulikpumpen 118 und 119 angetrieben werden. Die Hydraulikpumpe 117 zum Antrieb der Rohrweiche 112 wäre dann über die Hydraulikpumpe 115 an den Verbrennungs-Antriebsmotor 103 gekoppelt.

Statt des hier dargestellten Generators 132 kann auch ein beispielsweise dem LKW 102 zugeordneter Generator (z.B. eine Lichtmaschine) oder ein Generator, der nicht über den Nebenantrieb 123 angetrieben wird, für das Laden des elektrischen Energiespeichers 120 bei laufendem Verbrennungsmotor 103 genutzt werden.

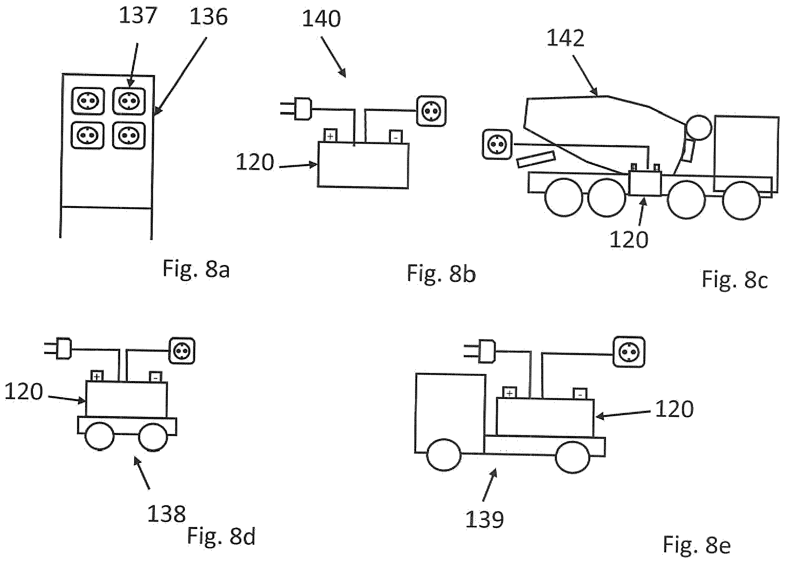

In den Figuren 8a bis 8e sind verschiedene Spannungsversorgungsmöglichkeiten auf der Baustelle dargestellt, die alternativ zur Versorgung des Elektromotors 124 genutzt werden können.

Figur 8a zeigt einen auf Baustellen üblichen Stromverteilerkasten 136 mit mehreren Steckdosen 137, der die Baustelle mit verschiedenen Spannungen (z.B. 240V und 400V) versorgt. Für den Antrieb des Verteilermastes 107 beziehungsweise der Abstützung kann, je nach Größe der Autobetonpumpe, eine übliche 240V-Spannungsversorgung ausreichend sein, alternativ kann ein 400V Drehstromanschluss mit üblicher Leistungsstärke verwendet werden.

Figur 8b zeigt einen auf der Baustelle vorhanden elektrischen Energiespeicher 120, der zur Versorgung verschiedener auf der Baustelle elektrisch angetriebener Arbeitsmaschinen geeignet ist. Mit einem Stecker kann der elektrische Energiespeicher beispielsweise vom Stromverteilerkasten 136 geladen werden. Ein derartiger elektrischer Energiespeicher auf der Baustelle ist damit insbesondere geeignet, ausreichend elektrische Leistung während Stromverbrauchsspitzen zusätzlich zum Strom aus dem Stromverteilerkasten 136 zur Verfügung zu stellen.

Die Figur 8c zeigt einen bekannten Fahrmischer 142, der mit einem elektrischen Energiespeicher 120 ausgestattet ist. Damit kann der Fahrmischer beim Entladen des Frischbetons in den Aufgabetrichter 116 gleichzeitig elektrische Leistung zum Antrieb des Elektromotors 124 des Betonpumpenaufbaus 101 zur Verfügung stellen. Zudem kann beispielsweise der elektrische Energiespeicher 120 des Betonpumpenaufbaus 101 geladen werden.

Die Figur 8d zeigt einen elektrischen Energiespeicher 120, der auf einem Anhänger 138 angeordnet ist. Der Anhänger 138 kann beispielsweise an die Autobetonpumpe 100 gekoppelt und damit zur Baustelle gezogen werden.

In Figur 8e ist ein elektrischer Energiespeicher 120 auf einem Transportfahrzeug 139 montiert, um auf der Baustelle ausreichend elektrische Antriebsleistung zur Verfügung zu stellen, insbesondere, wenn auf einer Baustelle keine andere Baustellenstromversorgung vorhanden ist.

In allen oben genannten Ausführungsbeispielen kann der elektrische Energiespeicher 120 beispielsweise als wiederaufladbarer Akkumulator ausgeführt sein. Auch eine zur Stromversorgung geeignete Brennstoffzelle oder auch andere bekannte Arten der Stromversorgung können für die Versorgung des Elektromotors 124 genutzt werden.

Der Elektromotor 124 kann als Gleichstrom- oder Wechselstrommotor ausgebildet sein. Auf die, je nach eingesetztem Elektromotor 124, notwendigen Gleichstrom-/Wechselstrom- und andere Steuerungskomponenten, wurde aus Gründen der Übersichtlichkeit verzichtet.

### Bezugszeichenliste

- 100: Autobetonpumpe
- 101: Betonpumpenaufbau
- 102: LKW
- 103: LKW Antriebsmotor
- 104: Fahrgestell
- 105: LKW Rahmen
- 106: Drehschemel
- 107: Verteilermast
- 108: Abstützung
- 109: Stützzylinder
- 110: Antrieb Knickgelenk
- 111: Betonpumpe
- 112: Rohrweiche
- 113: Rührwerk
- 114: Kardanwelle
- 115: Hydraulikpumpe Betonpumpe
- 116: Aufgabetrichter
- 117: Hydraulikpumpe Rohrweiche
- 118: Hydraulikpumpe Rührwerk
- 119: Hydraulikpumpe Mast / Abstützung
- 120: Elektrischer Energiespeicher Betonpumpenaufbau
- 121: Verteilerschaltgetriebe
- 122: Baustellenstromanschluss
- 123: Nebenantrieb (PTO)
- 124: Elektromotor
- 125: Knickgelenk
- 126: Mastarmsegmente
- 127: Betonpumpenunterbau
- 128: Hydraulikpumpenstrang
- 129: Getriebe Verbrennungs-Antriebsmotor
- 130: Hydraulische Umschalteinrichtung Mast/Abstützung
- 131: Hydraulische Umschalteinrichtung Betonpumpe
- 132: Generator
- 133: Elektrische Umschalteinrichtung
- 134: Kupplung
- 135: Verteilerschaltgetriebe
- 136: Stromverteilerkasten
- 137: Steckdose
- 138: Anhänger mit elektrischem Energiespeicher
- 139: Transporter mit elektrischem Energiespeicher
- 140: Baustellenakkumulator
- 141: Stützträgern
- 142: Fahrmischer

## Patentansprüche

1. Autobetonpumpe (100), aufweisend
- ein LKW - Fahrgestell (104) mit einem Verbrennungs-Antriebsmotor (103), wobei der Verbrennungs-Antriebsmotor (103) zum Antrieb der Autobetonpumpe beim Fahren ausgebildet ist,
- ein hydraulisch angetriebener Betonpumpenaufbau (101) mit einem Verteilermast (107), einer Abstützung (108) und einer Betonpumpe (111) zum Pumpen und Verteilen von Frischbeton,
- Hydraulikpumpen (115, 117, 118, 119), die zum Antrieb des Betonpumpenaufbaus (101) ausgebildet sind, wobei mindestens eine Hydraulikpumpe (115) zum Antrieb der Betonpumpe (111) ausgebildet ist und mindestens eine weitere Hydraulikpumpe (119) zum Antrieb des Verteilermastes (107) und der Abstützung (108) ausgebildet ist,
**dadurch gekennzeichnet, dass**
der Verbrennungs-Antriebsmotor (103) zum Antrieb der Hydraulikpumpe (115) ausgebildet ist, die zum Antrieb der Betonpumpe (111) ausgebildet ist, und dass ein Elektromotor (124) zum Antrieb nur der mindestens einen weiteren Hydraulikpumpe (119) ausgebildet ist, die zum Antrieb des Verteilermastes (107) und der Abstützung (108) ausgebildet ist.

2. Autobetonpumpe (100) nach Anspruch 1, **gekennzeichnet durch** eine hydraulische Umschalteinrichtung (130), die dazu ausgebildet ist, den Verteilermast (107) und die Abstützung (108) wechselseitig mit der mindestens einen weiteren Hydraulikpumpe (119) zu verbinden, die zum Antrieb des Verteilermastes (107) und / oder der Abstützung (108) ausgebildet ist.

3. Autobetonpumpe (100) nach Anspruch 1 oder 2, **dadurch gekennzeichnet, dass** der Verbrennungs-Antriebsmotor (103) zusätzlich zum Antrieb einer Hydraulikpumpe (117) ausgebildet ist, die zum Antrieb einer Rohrweiche (112) ausgebildet ist.

4. Autobetonpumpe (100) nach einem der vorhergehenden Ansprüche, **dadurch gekennzeichnet, dass** der Verbrennungs-Antriebsmotor (103) zusätzlich zum Antrieb einer Hydraulikpumpe (118) ausgebildet ist, die zum Antrieb eines Rührwerkes (113) ausgebildet ist.

5. Autobetonpumpe (100) nach Anspruch 1 oder 2, **dadurch gekennzeichnet, dass** der Elektromotor (124) zusätzlich zum Antrieb der Hydraulikpumpe (117) ausgebildet ist, die zum Antrieb der Rohrweiche (112) ausgebildet ist.

6. Autobetonpumpe (100) nach einem der Ansprüche 1, 2 oder 5, **dadurch gekennzeichnet, dass** der Elektromotor (124) zusätzlich zum Antrieb der Hydraulikpumpe (118) zum Antrieb des Rührwerkes (113) ausgebildet ist.

7. Autobetonpumpe (100) nach Anspruch 5 oder 6, **gekennzeichnet durch** eine weitere hydraulische Umschalteinrichtung (131), die die mindestens eine weitere Hydraulikpumpe (119), die zum Antrieb des Verteilermastes (107) und der Abstützung (108) ausgebildet ist, mit der Betonpumpe (111) verbindet.

8. Autobetonpumpe (100) nach einem der vorhergehenden Ansprüche, **dadurch gekennzeichnet, dass** der Elektromotor (124) über eine elektrische Umschalteinrichtung (133) mit Strom versorgt wird.

9. Autobetonpumpe (100) nach Anspruch 8, **dadurch gekennzeichnet, dass** die elektrische Umschalteinrichtung (133) dazu ausgebildet ist, einen elektrischen Energiespeicher (120) mit dem Elektromotor (124) zu verbinden.

10. Autobetonpumpe (100) nach Anspruch 8 oder 9, **dadurch gekennzeichnet, dass** die elektrische Umschalteinrichtung (133) dazu ausgebildet ist, einen Baustellenstromanschluss (122) mit dem Elektromotor (124) zu verbinden.

11. Autobetonpumpe (100) nach einem der vorhergehenden Ansprüche, **dadurch gekennzeichnet, dass** der Verbrennungs-Antriebsmotor (103) zum Antrieb eines Generators (132) ausgebildet ist.

12. Autobetonpumpe (100) nach Anspruch 11, **dadurch gekennzeichnet, dass** der Generator (132) über eine Kupplung (134) mit der Hydraulikpumpe (115) verbunden ist, die zum Antrieb der Betonpumpe (111) ausgebildet ist.

13. Autobetonpumpe (100) nach einem der Ansprüche 11 oder 12, **dadurch gekennzeichnet, dass** der Generator (132) zum Antrieb des Elektromotors (124) ausgebildet ist.

## Claims

1. Concrete pump truck (100) comprising
- a truck chassis (104) with a combustion engine (103), wherein the combustion drive engine (103) is designed to drive the concrete pump truck when driving,
- a hydraulically driven concrete pump assembly (101) with a distribution mast (107), a support (108) and a concrete pump (111) for pumping and distributing fresh concrete,
- hydraulic pumps (115, 117, 118, 119), which are designed to drive the concrete pump assembly (101), wherein at least one hydraulic pump (115) is designed to drive the concrete pump (111) and at least one further hydraulic pump (119) is designed to drive the distribution mast (107) and the support (108),
**characterized in that**
the combustion drive engine (103) is designed to drive the hydraulic pump (115) which is designed to drive the concrete pump (111), and that an electric motor (124) is designed to drive only the at least one further hydraulic pump (119), which is designed to drive the distribution mast (107) and the support (108).

2. Concrete pump truck (100) according to claim 1, **characterized by** a hydraulic changeover device (130), which is designed to connect the distribution mast (107) and the support (108) alternately to the at least one further hydraulic pump (119), which is designed to drive the distribution mast (107) and/or the support (108).

3. Concrete pump truck (100) according to claim 1 or 2, **characterized in that** the combustion drive engine (103) is additionally designed to drive a hydraulic pump (117) which is designed to drive a pipe switch (112).

4. Concrete pump truck (100) according to any one of the preceding claims, **characterized in that** the combustion drive engine (103) is additionally designed to drive a hydraulic pump (118) which is designed to drive an agitator (113).

5. Concrete pump truck (100) according to claim 1 or 2, **characterized in that** the electric motor (124) is additionally designed to drive the hydraulic pump (117), which is designed to drive the pipe switch.

6. Concrete pump truck (100) according to any one of claims 1, 2 or 5, **characterized in that** the electric motor (124) is additionally designed to drive the hydraulic pump (118) for driving the agitator (113).

7. Concrete pump truck (100) according to claim 5 or 6, **characterized by** a further hydraulic changeover device (131) which connects the at least one further hydraulic pump (119), which is designed to drive the distribution mast (107) and the support (108), to the concrete pump (111).

8. Concrete pump truck (100) according to any one of the preceding claims, **characterized in that** the electric motor (124) is supplied with power via an electrical switching device (133).

9. Concrete pump truck (100) according to claim 8, **characterized in that** the electrical switching device (133) is designed to connect an electrical energy storage device (120) to the electric motor (124).

10. Concrete pump truck (100) according to claim 8 or 9, **characterized in that** the electrical switching device (133) is designed to connect a construction site power connection (122) to the electric motor (124).

11. Concrete pump truck (100) according to any one of the preceding claims, **characterized in that** the combustion engine (103) is designed to drive a generator (132).

12. Concrete pump truck (100) according to claim 11, **characterized in that** the generator (132) is connected via a coupling (134) to the hydraulic pump (115), which is designed to drive the concrete pump (111).

13. Concrete pump truck (100) according to claim 11 or 12, **characterized in that** the generator (132) is designed to drive the electric motor (124).

## Revendications

1. Pompe à béton automotrice (100), comprenant
- un châssis camion (104) avec un moteur d'entraînement à combustion (103), le moteur d'entraînement à combustion (103) étant conçu pour entraîner la pompe à béton automotrice pendant la conduite,
- un ensemble de pompe à béton (101) entraîné hydrauliquement, avec un mât de distribution (107), un support (108) et une pompe à béton (111) pour pomper et distribuer du béton frais,
- des pompes hydrauliques (115, 117, 118, 119) qui sont conçues pour entraîner l'ensemble de pompe à béton (101), au moins une pompe hydraulique (115) étant conçue pour entraîner la pompe à béton (111) et au moins une autre pompe hydraulique (119) étant conçue pour entraîner le mât de distribution (107) et le support (108),
**caractérisé en ce que**
le moteur d'entraînement à combustion (103) est conçu pour entraîner la pompe hydraulique (115), qui est conçue pour entraîner la pompe à béton (111), et **en ce qu'**un moteur électrique (124) est conçu pour entraîner uniquement la au moins une autre pompe hydraulique (119), qui est conçue pour entraîner le mât de distribution (107) et le support (108).

2. Pompe à béton automotrice (100) selon la revendication 1, **caractérisée par** un dispositif de commutation hydraulique (130) qui est conçu pour relier alternativement le mât de distribution (107) et le support (108) à l'au moins une autre pompe hydraulique (119) qui est conçue pour entraîner le mât de distribution (107) et/ou le support (108).

3. Pompe à béton automotrice (100) selon la revendication 1 ou 2, **caractérisée en ce que** le moteur d'entraînement à combustion (103) est en outre conçu pour entraîner une pompe hydraulique (117) qui est conçue pour entraîner un aiguillage à tuyaux (112).

4. Pompe à béton automotrice (100) selon l'une des revendications précédentes, **caractérisée en ce que** le moteur d'entraînement à combustion (103) est en outre conçu pour entraîner une pompe hydraulique (118) qui est conçue pour entraîner un mélangeur (113).

5. Pompe à béton automotrice (100) selon la revendication 1 ou 2, **caractérisée en ce que** le moteur électrique (124) est conçu en plus de l'entraînement de la pompe hydraulique (117) qui est utilisée pour entraîner l'aiguillage à tuyaux (112).

6. Pompe à béton automotrice (100) selon l'une des revendications 1, 2 ou 5, **caractérisée en ce que** le moteur électrique (124) est conçu en plus de l'entraînement de la pompe hydraulique (118) pour entraîner le mélangeur (113).

7. Pompe à béton automotrice (100) selon la revendication 5 ou 6, **caractérisée par** un autre dispositif de commutation hydraulique (131), qui relie l'au moins une autre pompe hydraulique (119), qui est utilisée pour l'entraînement du mât de distribution (107) et le support (108), avec la pompe à béton (111).

8. Pompe à béton automotrice (100) selon l'une des revendications précédentes, **caractérisée en ce que** le moteur électrique (124) est alimenté en courant par un dispositif de commutation électrique (133).

9. Pompe à béton automotrice (100) selon la revendication 8, **caractérisée en ce que** le dispositif de commutation électrique (133) est conçu pour relier un accumulateur d'énergie électrique (120) au moteur électrique (124).

10. Pompe à béton automotrice (100) selon la revendication 8 ou 9, **caractérisée en ce que** le dispositif de commutation électrique (133) est conçu pour relier une prise de courant de chantier (122) au moteur électrique (124).

11. Pompe à béton automotrice (100) selon l'une des revendications précédentes, **caractérisée en ce que** le moteur d'entraînement à combustion (103) est conçu pour entraîner un générateur (132).

12. Pompe à béton automotrice (100) selon la revendication 11, **caractérisée en ce que** le générateur (132) est relié par un accouplement (134) à la pompe hydraulique (115) qui sert à entraîner la pompe à béton (111).

13. Pompe à béton automotrice (100) selon l'une des revendications 11 ou 12, **caractérisée en ce que** le générateur (132) est conçu pour entraîner le moteur électrique (124).
